(19) **Europäisches Patentamt**
**European Patent Office**
**Office européen des brevets**

(11) **EP 2 103 055 B1**

(12) **FASCICULE DE BREVET EUROPEEN**

(45) Date de publication et mention
de la délivrance du brevet:
**03.11.2010 Bulletin 2010/44**

(21) Numéro de dépôt: **07857795.4**

(22) Date de dépôt: **19.12.2007**

(51) Int Cl.:
*H04L 12/56* [(2006.01)]    *H04L 12/26* [(2006.01)]

(86) Numéro de dépôt international:
**PCT/EP2007/064172**

(87) Numéro de publication internationale:
**WO 2008/074817 (26.06.2008 Gazette 2008/26)**

(54) **PROCÉDÉ D'OPTIMISATION DU PARTAGE D'UNE PLURALITÉ DE RESSOURCES RÉSEAU ENTRE UNE PLURALITÉ DE FLUX APPLICATIFS**

VERFAHREN ZUM OPTIMIEREN DER GEMEINSAMEN BENUTZUNG MEHRERER NETZWERKBETRIEBSMITTEL ZWISCHEN MEHREREN ANWENDUNGSFLÜSSEN

METHOD FOR OPTIMISING THE SHARING OF A PLURALITY OF NETWORK RESOURCES BETWEEN A PLURALITY OF APPLICATION FLOWS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **20.12.2006 FR 0655722**

(43) Date de publication de la demande:
**23.09.2009 Bulletin 2009/39**

(73) Titulaire: **IPANEMA TECHNOLOGIES**
**92260 Fontenay aux Roses (FR)**

(72) Inventeur: **GRENOT, Thierry**
**92190 Meudon (FR)**

(74) Mandataire: **Ilgart, Jean-Christophe et al**
**BREVALEX**
**3, rue du Docteur Lancereaux**
**75008 Paris (FR)**

(56) Documents cités:
**FR-A1- 2 842 677      US-A- 5 359 593**

- **PROUST C: "An approach for Routing at Flow level draft-proust-flow-routing-00.txt" INTERNET CITATION, [Online] février 2004 (2004-02), XP002335686 Extrait de l'Internet: URL:http: //www.watersprings.org/pub/id/dra ft-proust-flow-routing-00.txt> [extrait le 2005-07-12]**
- **DUTTA D ET AL: "AN ACTIVE PROXY BASED ARCHITECTURE FOR TCP IN HETEROGENEOUS VARIABLE BANDWIDTH NETWORKS" GLOBECOM'01. 2001 IEEE GLOBAL TELECOMMUNICATIONS CONFERENCE. SAN ANTONIO, TX, NOV. 25 - 29, 2001, IEEE GLOBAL TELECOMMUNICATIONS CONFERENCE, NEW YORK, NY : IEEE, US, vol. VOL. 4 OF 6, 25 novembre 2001 (2001-11-25), pages 2316-2320, XP001060558 ISBN: 0-7803-7206-9**

**Description**

**DOMAINE TECHNIQUE**

La présente invention se situe dans le domaine des télécommunications et concerne plus spécifiquement un procédé d'optimisation du partage d'une pluralité de ressources réseau entre une pluralité de flux de données générés par une pluralité d'applications, lesdits flux étant susceptibles d'emprunter un nombre n de chemins [ABi], i= 1 à n, reliant au moins un site A et au moins un site B dans un réseau de télécommunication.

L'invention concerne également un dispositif et un logiciel adaptés pour mettre en oeuvre le procédé.

Ce procédé et ce dispositif peuvent être mis en oeuvre quelle que soit l'étendue géographique du réseau, quel que soit le débit acheminé par celui-ci et quel que soit le nombre d'usagers de ce réseau.

**ÉTAT DE LA TECHNIQUE ANTÉRIEURE**

Les réseaux de télécommunication en mode paquet se **caractérisent en ce que** les informations acheminées sont véhiculées en groupes appelés paquets constitués essentiellement d'un en-tête contenant les informations pour l'acheminement du paquet dans le réseau et des données à transmettre.

Des informations d'adressage sont insérées dans les en-têtes pour permettre l'identification des flux d'information par les applications finales. Les paquets sont véhiculés à travers le réseau, et empruntent au gré de ce réseau des moyens de transmission et de commutation variés.

La principale technologie mise en oeuvre actuellement pour ces réseaux de télécommunication en mode paquet est le protocole IP (Internet Protocol). Ce protocole est utilisé de bout en bout, et peut être utilisé sur des réseaux de transmission très divers. Un exemple de réseau en mode paquet est le réseau Internet, fonctionnant avec le protocole IP. Quelques exemples de moyens de transmission et de commutation associés au protocole IP sont des réseaux Ethernet, RNIS (pour Réseau Numérique à Intégration de Service), FR (pour Frame Relay), ATM (pour Asynchronous Transfer Mode), SDH (Synchronous Digital Hierarchy), SONET (pour Synchronous Optical Network), MPLS (pour Multiprotocol Label Switching), ou encore DWDM (pour Dense Wavelength Digital Multiplexing), etc.

Un exemple d'usage de réseau fonctionnant avec le protocole IP est constitué par les VPN (pour Virtual Private Networks) ou Réseaux Privés Virtuels. Ces réseaux offrent une interconnexion au niveau IP de manière privative pour un groupe d'usagers donné (typiquement une entreprise ou une organisation ayant plusieurs établissements), tout en utilisant une infrastructure de réseau partagée (par exemple l'Internet).

Les paquets sont typiquement émis par un grand nombre de sources fonctionnant indépendamment les unes des autres, vers un grand nombre de destinations fonctionnant également indépendamment les unes des autres.

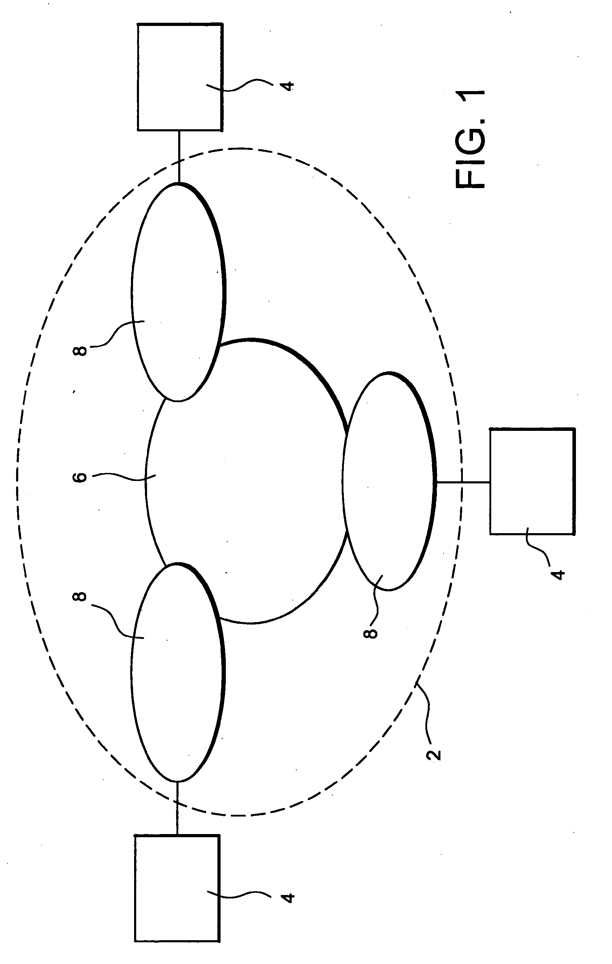

La figure 1 donne un exemple d'un tel réseau 2.

Les usagers 4 peuvent être soit des usagers individuels, soit des agences, des entreprises ayant leur propre réseau local interne, etc.

Le réseau de transit 6 représente la partie centrale, généralement à grande capacité et couvrant un large territoire (le monde entier dans le cas du réseau Internet). Ce réseau est généralement partagé par une multitude d'usagers et/ou de réseaux privés.

Les réseaux d'accès 8 sont généralement à débit moyen ou lent, et partagés entre des usagers localisés dans une zone géographique limitée. La « boucle locale », lien filaire, optique, radio, etc. entre l'usager et le fournisseur du service d'accès est considérée par la suite comme faisant partie du réseau d'accès.

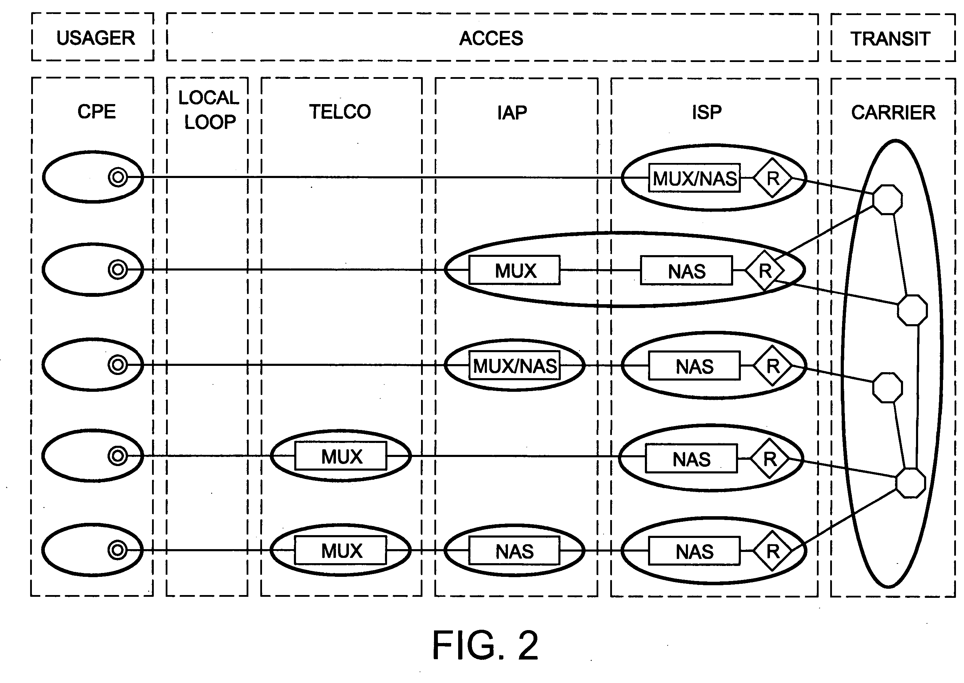

La figure 2 montre différents cas possibles de réseaux d'accès. Les conventions d'écriture sont les suivantes :

- Pour les réseaux :

   Carrier (en langue anglaise) : transporteur de grandes quantités d'information sur de longues distances ; il réalise aussi l'interconnexion avec d'autres carriers, permettant ainsi dans le cas du réseau Internet une interopérabilité entre les usagers des différents fournisseurs de service Internet ISP (Internet Service Provider en langue anglaise).
   IAP : (Internet Access Provider en langue anglaise) fournisseur d'accès au réseau ; il collecte le trafic pour le compte de l'ISP, ce dernier fournit typiquement à ses usagers divers serveurs d'authentification, d'hébergement de site Web, de tarification, de messagerie, etc. ainsi que l'accès au réseau de transit.
   Boucle locale : (Local Loop en langue anglaise) liaison (filaire, optique, radio, ...) reliant l'usager au réseau.
   TELCO : opérateur téléphonique, souvent propriétaire de la boucle locale.

- Pour les équipements :

CPE : (Customer Premices Equipment en langue anglaise) équipement d'usager connecté au réseau (en général un routeur d'accès).

MUX : multiplexeur/démultiplexeur (il y en a de nombreuses sortes : téléphonique, xDSL, SDH, etc. ...).

NAS : (Network Access Server, en langue anglaise) serveur d'accès au réseau ; ce peut être aussi un routeur d'accès.

R : Routeur (ou commutateur).

On peut voir qu'il y a de très nombreuses configurations possibles. Chacun des équipements (CPE, MUX, NAS, R, ...) correspond à une fonction de concentration de trafic et de mise en commun de ressources de télécommunication.

Avec le développement prodigieux des échanges d'informations à travers les réseaux de télécommunication, il devient essentiel pour les opérateurs d'assurer une qualité de service à leurs clients. La Qualité de Service est constituée par l'ensemble des caractéristiques pertinentes affectant le transfert des informations entre deux points donnés d'un réseau. On trouve en particulier :

- qualité de l'accès au service ;
- la disponibilité du service ;
- le temps de remise en service en cas de défaillance.
- qualité du service de transfert d'information ;
- le délai de transfert des informations entre la source et la destination ;
- la variation du délai de transfert des informations (la gigue) ;
- la dégradation des informations véhiculées (pertes, erreurs).

La Qualité de Service est principalement liée à l'état de congestion des différents éléments du réseau empruntés par les informations pendant leur transfert. Bien qu'il existe une infinité de gradations, on peut schématiser les cas de fonctionnement rencontrés par ces deux modes :

- soit il n'y a aucune réservation de ressource, et le réseau fait au mieux pour relayer les informations jusqu'au destinataire ;
- soit il y a une réservation de ressource, et la quantité d'informations injectées dans le réseau est plus ou moins statistiquement contrôlée.

Dans tous les cas, des systèmes de stockage temporaire en file d'attente (mémoires), situés à chaque point de multiplexage, de concentration ou de commutation, permettent de traiter les simultanéités d'arrivée des paquets. Le taux instantané d'occupation mémoire rencontré par un paquet et la politique de gestion (priorité, nombre de files d'attente, règle de vidage, rejet, ...) mise en oeuvre au niveau de chaque file d'attente déterminent le temps passé par un paquet dans ce dispositif, ainsi que son éventuel rejet.

## Performance de bout en bout

La performance de bout en bout, telle qu'elle est constatée par les applications sources des flux et les utilisateurs (humains ou machines) utilisant ces applications dépend non seulement du dimensionnement du réseau, mais aussi des mécanismes de gestion du trafic implémentés dans le réseau. Certains de ces mécanismes sont très généraux et présentent un fonctionnement avec une importante granularité, d'autres sont très fins, et présentent un fonctionnement différencié flux par flux. La productivité de ces applications est fortement liée aux caractéristiques techniques du réseau de bout en bout, telles que délais, pertes et capacité d'échange en termes de bande passante.

## Congestion

Les liaisons entre sites subissent une charge variable en fonction, d'une part de la quantité de communications qui est véhiculée, et d'autre part du comportement effectif de chacune de ces communications.

La charge présentée peut bien entendu être supérieure à la capacité de la liaison : c'est ce qu'on appelle une congestion.

Dans les situations de congestion, c'est le réseau qui devient l'élément prépondérant en ce qui concerne la performance de bout en bout des applications. Il est donc nécessaire, soit d'éviter les congestions en surdimensionnant le réseau, soit de gérer les congestions de manière à ne pas dégrader les performances en deçà d'un seuil prédéterminé.

## Élasticité des flux applicatifs

Les flux applicatifs générés peuvent avoir différents comportements en fonction de la nature de l'application qui les génère ainsi que des caractéristiques du réseau. Un facteur particulièrement important à prendre en compte est l'élasticité des flux, c'est-à-dire leur capacité à plus ou moins utiliser la ressource réseau, notamment la bande passante, mise à leur disposition.

Cette caractéristique est liée d'une part à la nature même de l'application, et d'autre part au type de protocole de bout en bout qui est utilisé. Par exemple, les flux échangé par le protocole UDP ne sont en général pas élastiques, tandis que ceux qui sont échangés par le protocole TCP sont en général moyennement ou très élastiques.

Ainsi par exemple :

- un flux temps réel n'est en général pratiquement pas élastique : il ne s'adapte pas à la ressource réseau mise à sa disposition. Ceci se traduit par le fait que ce flux ne pourra pas s'adapter correctement à une ressource insuffisante, et que l'application ne fonctionne donc pas dans cette situation. De plus, si la ressource est en excès, l'application n'utilisera pas le supplément de ressource disponible. Un exemple d'application source de flux temps réel non élastique est le transport de la voix.
- un flux transactionnel est moyennement élastique : il s'adapte moyennement à la ressource mise à sa disposition. Il en résulte que si la ressource est insuffisante, les transactions sont longues à être exécutées et, que si la ressource est en excès, l'application n'utilisera que faiblement le supplément de ressource. Un exemple d'application source de flux transactionnel élastique est la saisie de formulaire.

En revanche, un flux de transfert de données se caractérise le plus souvent par une grande élasticité : il s'adapte à la ressource mise à sa disposition. Lorsque la ressource sera insuffisante, le temps pris par le transfert s'allongera, mais inversement ce flux sera capable d'utiliser une grande ressource réseau, et de diminuer ainsi le temps pris par le transfert des données. Un exemple d'application source de flux de transfert élastique est la copie de fichiers.

## Coût du réseau

Le coût du réseau, que ce soit pour l'opérateur du réseau ou pour un client qui lui achète le service, est en grande partie lié au niveau de ressource, notamment en débit, disponible pour transporter des flux applicatifs entre différents utilisateurs. De façon générale, plus les débits disponibles sont élevés, plus le réseau est cher. Aussi, pour maîtriser le coût du réseau, il convient de limiter son dimensionnement de manière à utiliser au mieux la ressource disponible.

## Problématique du choix de la meilleure liaison

Dans un certain nombre de cas, il peut être intéressant d'avoir plusieurs liaisons disponibles entre les sites sources et les sites destinations afin, par exemple, d'augmenter la disponibilité des sites ainsi reliés, ou encore d'augmenter la ressource totale disponible sur le site.

D'une façon générale, ces différentes liaisons peuvent présenter des caractéristiques différentes :

- le débit : par exemple un accès coûteux à faible débit et un accès peu coûteux à fort débit ;
- les performances : par exemple le temps de transit et la probabilité de perte d'informations ;
- la charge instantanée ;
- le niveau de sécurité : par exemple un accès primaire MPLS (pour Multiprotocol Label Switching) et un accès secondaire de type Internet ;
- la disponibilité (probabilité d'une panne totale d'un accès)
- etc.

D'un autre côté, les différentes communications peuvent avoir des exigences de niveaux différents (performance, disponibilité, sécurité...) en fonction de la nature des applications et de la sensibilité des informations échangées.

Il se pose alors la question de décider de la meilleure répartition des flux applicatifs entre les liaisons disponibles, pour obtenir le meilleur compromis coût/performance.

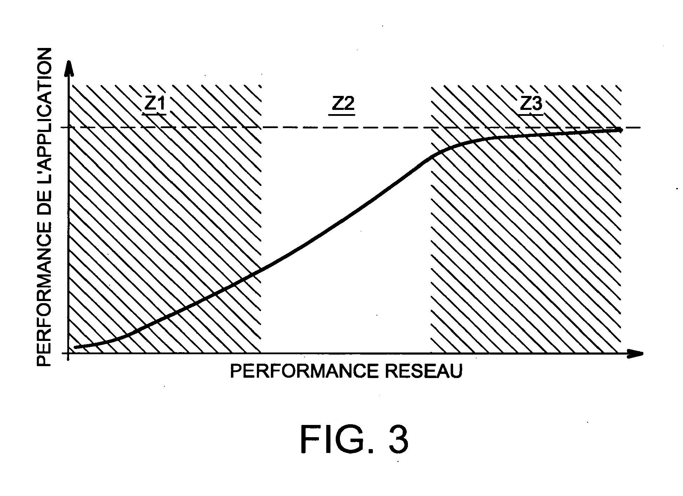

La figure 3 présente la relation générale entre la performance applicative et le niveau de la ressource alloué pour que l'application échange ses données : on trouve trois zones distinctes, soit une première zone Z1 de sous capacité, une deuxième zone Z2 de capacité adaptée, et une troisième zone Z3 de surcapacité. Entre la première zone Z1 et la troisième zone Z3, la productivité d'une application croît avec la performance réseau, puis plafonne à une valeur asymptote correspondant à la zone de surcapacité. Il est par exemple inutile qu'une transaction puisse être exécutée plus vite que les opérations de saisie qui la déclenchent. Ces zones dépendent en grande partie des modes de gestion du trafic implémentés dans le réseau ainsi que de la nature des applications échangeant des informations. Une surcapacité conduit à un surcoût de fonctionnement, une sous capacité conduit à une mauvaise productivité.

Les solutions connues dans l'art antérieur, a voir par example le document FR 2842677 A1 (iPANEMATECHNOLOGIES [FR]) publié le 23 janvier 2004 (2204-01-23), pour résoudre ce problème sont fondées sur l'utilisation de différents critères utilisés de manière indépendante ou combinés entre eux, tels que par exemple :

- répartition statique, consistant à orienter les flux étant orientés en fonction de la nature de l'application (ou de l'identité de l'émetteur ou du récepteur) qui génère les données constituant ces flux,
- répartition statistique, dans laquelle chaque nouveau flux a une probabilité définie sur une des liaisons disponibles,
- répartition dynamique consistant à orienter les flux en fonction de la charge moyenne des liaisons
- etc.

Ces mécanismes ne parviennent qu'imparfaitement à leur but, en particulier à cause de la nature élastique de la majorité des flux applicatifs : les liaisons auront tendance à être chargées (congestionnées) par un faible nombre de flux applicatifs élastiques, et l'ensemble des flux sera réparti indépendamment de l'impact de ces congestions sur les différentes applications.

Une autre solution connue consiste à surdimensionner les liaisons. Cependant, il est très difficile de déterminer la capacité réseau réellement nécessaire en fonction des objectifs de l'entité utilisant ce réseau. Par exemple dans une entreprise, les flux «de confort» tels que l'accès personnel à Internet, la musique en ligne, les volumineuses pièces jointes aux courriers électroniques, etc. rentreront en compétition avec les applications plus importantes (applications métiers, monétique, etc.) au regard de l'entreprise, sans qu'il soit possible de réguler simplement l'équilibre.

Outre son coût, le surdimensionnement chronique encourage les «mauvaises pratiques» d'utilisation du réseau, ce qui conduit à une augmentation régulière de la proportion des flux peu critiques sur le réseau.

Le but de l'invention est d'assurer une répartition de la charge permettant de maîtriser au mieux les performances de bout en bout, le coût du réseau, le dimensionnement de la capacité du réseau, et les différents états de congestion de manière à obtenir une utilisation optimale des ressources du réseau tout en garantissant la productivité des applications générant les flux échangés via le réseau.

## EXPOSÉ DE L'INVENTION

Ce but est atteint au moyen d'un procédé d'optimisation du partage d'une pluralité de ressources réseau entre une pluralité de flux de données générés par une pluralité d'applications, lesdits flux étant susceptibles d'emprunter un nombre n de chemins [ABi], i= 1 à n, reliant au moins un site A et au moins un site B dans un réseau de télécommunication.

Le procédé selon l'invention comporte:

- une première phase consistant à déterminer à chaque instant t pour chaque flux une valeur $U(t)$ représentant l'utilisation par ledit flux d'au moins une ressource réseau parmi la pluralité de ressources réseau disponibles, une valeur $D(t)$ représentant la demande de ressource réseau nécessaire et suffisante pour que le flux satisfasse un objectif de performance pré-établi pour ladite application, et une valeur $C(t)$ représentant une contrainte limitant la ressource réseau attribuable au flux considéré,
- une deuxième phase consistant à :

  • calculer, en fonction desdites valeurs $U(t)$, $D(t)$ et $C(t)$, une valeur $DE(t)$ représentant la quantité de ressource réseau effectivement nécessaire à un instant t pour satisfaire l'objectif de performance dudit flux en fonction de la contrainte $C(t)$, du type d'application générant ledit flux et du type d'utilisation de ladite application, et à
  • calculer en fonction des différentes valeurs $DE(t)$, et pour chaque chemin de transmission [ABi], i=1 à n, une valeur $DDE_i(t)$ représentant la Densité de Demande Effective sur ledit chemin en prenant en compte l'ensemble des flux échangés entre les sites A et B,

- une troisième phase consistant à répartir dynamiquement les flux générés par les différentes applications entre les différents chemins [ABi], i=1 à n, en fonction des densités de Demande Effective $DDE_i(t)$ sur les chemins [ABi], i=1 à n.

La valeur $DDE_i(t)$ caractérise la Demande Effective sur la ressource considérée ramenée à la capacité du chemin.

Selon l'invention, pour chaque flux échangé entre les sites A et B, la phase de régulation comporte les étapes suivantes :

- mesurer la valeur de l'Usage U(t),
- déterminer la valeur de la Demande D(t),
- déterminer la valeur de la Contrainte C(t),
- calculer la valeur de la Demande Effective DE(t),
- calculer les densités de Demande Effective $DDE_i(t)$ sur chaque chemin [ABi], i=1 à n, en prenant en compte l'ensemble des flux échangés entre les sites A et B,
- modifier la répartition des flux sur les chemins [ABi], i=1 à n, de manière à équilibrer les Densités de Demande Effective sur les chemins disponibles.

Le procédé selon l'invention s'applique également pour aiguiller un ou plusieurs flux nouvellement générés vers le meilleur chemin, c'est à dire le chemin qui aura la plus petite Densité de Demande Effective parmi l'ensemble des chemins possibles une fois l'aiguillage réalisé.

Dans ce cas, la phase de régulation comporte un processus discontinu comportant les étapes suivantes:

lorsqu'un nouveau flux devant être échangé entre le site A et le site B apparaît:

- identifier la nature de l'application qui génère ledit nouveau flux,
- déterminer la valeur D(t) initialement associée à ce nouveau flux,
- effectuer une projection de la Densité de Demande Effective $DDE_i(t)$ sur chaque chemin [ABi], i=1 à n, dans l'hypothèse où le nouveau flux emprunterait chacun desdits chemins,
- aiguiller le nouveau flux vers le chemin ayant la plus petite projection de Densité de Demande Effective $DDE_i(t)$.

La projection de la Densité de Demande Effective sur les chemins disponibles est une estimation de ce que serait la Densité de Demande Effective sur ces chemins si le nouveau flux applicatif les empruntait.

Notons que la répartition des flux entre les différents chemins [ABi], i=1 à n, est effectuée en outre en fonction du niveau de sécurité de chacun desdits chemins [ABi], i=1 à n, et/ou du niveau de qualité assuré par chacun desdits chemins [ABi], i=1 à n, et/ou du coût financier de l'utilisation de chacun desdits chemins [ABi], i=1 à n.

Dans une variante de mise en oeuvre du procédé selon l'invention, chaque flux échangé entre les sites A et B est un agrégat de plusieurs flux individuels.

Dans cette variante, les flux individuels sont agrégés en fonction de la topologie du réseau, et/ou de la typologie des flux, et/ou du nombre de flux pour chaque application, et/ou de la criticité de chaque flux.

Dans un exemple d'application du procédé selon l'invention, la ressource réseau partagée entre les différents flux représente la bande passante globale disponible pour échanger ces flux pendant une communication entre les sites A et B.

Dans cette application, la valeur U(t) représente le débit effectivement utilisé pour transmettre un flux entre les sites A et B, la valeur D(t) représente le débit nécessaire et suffisant pour que le flux généré satisfasse l'objectif de performance pré-établi associé à l'application générant ledit flux, la valeur C(t) représente la valeur maximale du débit autorisé par le réseau pour transmettre le flux considéré, et la valeur DE(t) représente une estimation du débit du débit effectivement nécessaire pour que le dit flux satisfasse son objectif de performance en tenant compte de ses caractéristiques d'élasticité.

La valeur DE(t) est définie de la façon suivante :

- en l'absence de limitation de débit (flux applicatif non contraint par le réseau),

$$DE(t) = Min[U(t), D(t)];$$

et
- en présence de limitations de débit (flux applicatif contraint par le réseau à la valeur C(t)):

- lorsque C(t) est supérieur à D(t), on a aussi DE(t) = Min[U(t), D(t)],

Cependant, on peut remarquer que comme par définition de la contrainte C(t) on a U(t) ~ C(t) et que d'autre part C(t) > D(t), on a finalement :

$$DE(t) = D(t)$$

et

- lorsque C(t) est inférieur ou égal à D(t), on ne peut faire qu'une estimation a priori de la demande effective DE(t) :

$$DE(t) = D(t)$$

Dans ce mode de réalisation, pour un chemin donné $[AB_i]$, i=1 à n, de bande passante disponible $BW_i$, emprunté par une pluralité de flux $F_j$, j=1 à F, la valeur de la Densité de Demande Effective $DDE_i(t)$ à l'instant t est égale à la somme des Demandes Effectives $DE_j(t)$ de chaque flux divisée par la bande passante totale $BW_i$ dudit chemin :

$$DDE_i(t) = [\textstyle\sum_{(j=1\text{à}F)} DE_j(t)] / BW_i.$$

En cas de nouveaux flux devant être échangés entre les sites A et B, si on suppose que la Densité de Demande Effective de chaque chemin $DDE_i(t)$ est déjà déterminée, la projection de Densité de Demande Effective pour le chemin lors de l'arrivée du nouveau flux (nf) se calcule comme suit :

$$Proj[DDE_i(t)] = DDE_i(t) + Dnf(t)/BW.$$

On remarque alors que :

- $Proj[DDE_i(t)]$ inférieure à 100% indique que le chemin est sous-chargé, et donc capable d'accueillir le nouveau flux applicatif tout en continuant de satisfaire les performances de ceux déjà présents,
- $Proj[DDE_i(t)]$ supérieure ou égale à 100% indique que le chemin est surchargé, et qu'il ne peut pas attribuer suffisamment de ressources pour satisfaire les performances de tous les flux.

Dans ce cas, il est possible soit de défavoriser certains flux, jugés moins critiques, pour en protéger d'autres, jugés plus critiques, soit de contraindre tous les flux d'une façon identique.
Le procédé selon l'invention est mis en oeuvre au moyen d'un dispositif comportant :

- des moyens pour déterminer à chaque instant t pour chaque flux une valeur U(t) représentant l'utilisation par ledit flux d'au moins une ressource réseau parmi la pluralité de ressources réseau disponibles, une valeur D(t) représentant la demande de ressource réseau nécessaire et suffisante pour que le flux satisfasse un objectif de performance pré-établi pour ladite application, et une valeur C(t) représentant une contrainte limitant la ressource réseau attribuable au flux considéré, et pour calculer, en fonction desdites valeurs U(t), D(t) et C(t), une valeur DE(t) représentant la ressource réseau effectivement nécessaire à un instant t pour que ledit flux satisfasse l'objectif de performance en présence de la contrainte C(t), du type d'application générant ledit flux et du type d'utilisation de ladite application,
- des moyens pour calculer en fonction des différentes valeurs DE(t), et pour chaque chemin de transmission [ABi], i=1 à n, une valeur $DDE_i(t)$ représentant la Densité de Demande Effective de ladite ressource réseau sur ledit chemin en prenant en compte l'ensemble des flux échangés entre les sites A et B et pour répartir dynamiquement les flux générés entre les différents chemins [ABi], i=1 à n, en fonction des densités de Demande Effective $DDE_i(t)$ des chemins [ABi], i=1 à n.

Selon l'invention, lesdits moyens comportent :

lesdits moyens (19) comportent :

- un module pour mesurer la valeur U(t) pour chaque flux échangé au cours d'une communication entre le site A et le site B,
- un module pour déterminer la valeur D(t),
- un module pour déterminer la valeur C(t),
- un module pour calculer la valeur DE(t),

- un module pour calculer les densités de Demande Effective $DDE_i(t)$ sur chaque chemin [ABi], i=1 à n, en prenant en compte l'ensemble des flux échangés entre les sites A et B,
- un module pour répartir les flux sur les chemins [ABi], i=1 à n, de manière à équilibrer les Densités de Demande Effective des chemins disponibles.

Préférentiellement, lesdits moyens comportent en outre :

- un module pour identifier un nouveau flux échangeant des informations entre le site A et le site B,
- un module pour déterminer la valeur D(t) associée initialement à ce nouveau flux,
- un module pour effectuer une projection de la Densité de Demande Effective sur chaque chemin [ABi], i=1 à n, dans l'hypothèse où le nouveau flux emprunterait chacun desdits chemins,
- un module pour aiguiller le nouveau flux vers le chemin i ayant la plus petite projection de densité de Demande Effective $DDE_i(t)$.

Le procédé selon l'invention est implémenté au moyen d'u logiciel stocké sur un support connectable à un réseau de télécommunication adapté pour l'optimisation du partage d'une pluralité de ressources réseau entre une pluralité de flux de données générés par une pluralité d'applications, lesdits flux étant susceptibles d'emprunter un nombre n de chemins [ABi], i= 1 à n, reliant au moins un site A et au moins un site B dans un réseau de télécommunication.
Ce logiciel comporte :

- des instructions pour déterminer à chaque instant t pour chaque flux une valeur U(t) représentant l'utilisation par ledit flux d'au moins une ressource réseau parmi la pluralité de ressources réseau disponibles, une valeur D(t) représentant la demande de ressource réseau nécessaire et suffisante pour que le flux satisfasse un objectif de performance pré-établi pour ladite application, et une valeur C(t) représentant une contrainte limitant la ressource réseau attribuable au flux considéré, et
- des instructions pour :

  • calculer, en fonction desdites valeurs U(t), D(t) et C(t), une valeur DE(t) représentant la quantité de ressource réseau effectivement nécessaire à un instant t pour satisfaire l'objectif de performance dudit flux en fonction de la contrainte C(t), du type d'application générant ledit flux et du type d'utilisation de ladite application, et à
  • calculer en fonction des différentes valeurs DE(t), et pour chaque chemin de transmission [ABi], i=1 à n, une valeur $DDE_i(t)$ représentant la Densité de Demande Effective sur ledit chemin en prenant en compte l'ensemble des flux échangés entre les sites A et B, et

- des instructions pour répartir dynamiquement les flux générés par les différentes applications entre les différents chemins [ABi], i=1 à n, en fonction des densités de Demande Effective $DDE_i(t)$ sur les chemins [ABi], i=1 à n,
- des instructions pour mesurer la valeur U(t) pour chaque flux échangé cours d'une communication entre le site A et le site B,
- des instructions pour déterminer la valeur D(t),
- des instructions pour déterminer la valeur C(t),
- des instructions pour calculer la valeur DE(t),
- des instructions pour calculer les Densités de Demande Effective respectives $DDE_i(t)$ de chaque chemin [ABi], i=1 à n, pour l'ensemble des flux échangés entre les sites A et B,
- des instructions pour répartir les flux sur les chemins [ABi], i=1 à n, de manière à équilibrer les Densités de Demande Effectives sur les chemins disponibles.

Dans un mode préféré de réalisation, le logiciel selon l'invention comporte en outre :

- des instructions pour identifier un nouveau flux à échanger entre le site A et le site B,
- des instructions pour mesurer la valeur D(t) associée initialement à ce nouveau flux,
- des instructions pour calculer une projection de la Densité de Demande Effective $DDE_i(t)$ de chaque chemin [ABi], i=1 à n, dans l'hypothèse où le nouveau flux emprunterait chacun desdits chemins,
- des instructions pour aiguiller le nouveau flux vers le chemin i ayant la plus petite projection de la Densité de Demande Effective $DDE_i(t)$.

## BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :

- la figure 1, représente un schéma général d'un réseau de transmission dans lequel est mis en oeuvre le procédé selon l'invention ;
- la figure 2 représente différentes topologies de réseaux d'accès ;
- la figure 3 représente une courbe illustrant la performance d'une application en fonction des performances du réseau ;
- les figures 4 et 5 représentent schématiquement deux sites A et B échangeant des données via plusieurs accès à un réseau de télécommunication ;
- la figure 6 représente un exemple de courbe illustrant la variation au cours du temps de l'usage et de la demande de débit par une application générant un flux entre les sites A et B ;
- la figure 7 représente la variation au cours du temps de la Demande Effective pour un flux non contraint selon l'invention ;
- la figure 8 représente la variation au cours du temps de la Demande Effective pour un flux dont la contrainte est supérieure à la Demande selon l'invention ;
- la figure 9 représente la variation au cours du temps de la Demande Effective pour un flux dont la contrainte est inférieure à la Demande selon l'invention ;
- la figure 10 représente un organigramme illustrant un procédé d'optimisation de la répartition des flux établis sur un ensemble de ressources partagées selon l'invention ;
- la figure 11 un organigramme illustrant un procédé d'aiguillage des nouveaux flux sur un ensemble de ressources partagées selon l'invention.

## EXPOSÉ DÉTAILLÉ DE MODES DE RÉALISATION PARTICULIERS

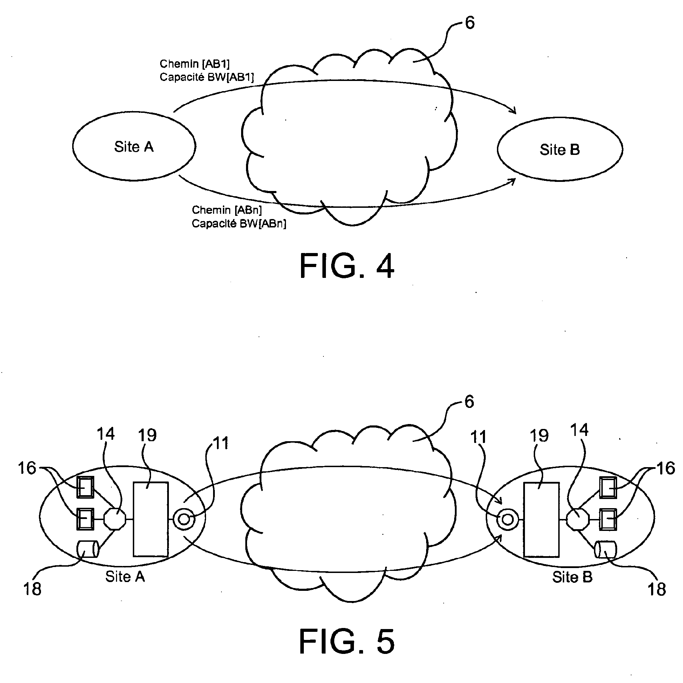

En référence à la figure 4, deux sites A et B reliés à un réseau d'interconnexion 10 sont susceptibles d'échanger des informations via n chemins [AB1], [AB2], ..., [ABn]. La capacité de chacun de ces chemins est notée BW[ABi] (en bits/seconde), avec i appartenant à [1..n].

En référence à la figure 5, chacun des sites A et B comporte au moins un équipement d'accès au réseau 11, au moins un concentrateur/commutateur 14, et éventuellement au moins une station de travail 16, et au moins un serveur d'application 18.

Les stations de travail 16 et les serveurs 18 sont des terminaux de différentes natures (téléphones, caméras, écrans, ordinateurs, systèmes de stockage ...) susceptibles d'échanger des flux applicatifs au cours d'une communication entre les sites A et B.

Selon l'invention, chacun des sites A et B comporte en outre au moins un aiguilleur/régulateur 19 programmé pour optimiser la répartition des flux applicatifs sur les différents chemins disponibles entre les sites A et B. A cet effet, à chaque flux applicatif est associé un ensemble de valeurs qui le caractérise : l'Usage, la Demande, la Contrainte, et la Demande Effective de débit pendant la durée de la communication (transaction, appel téléphonique, visioconférence ...).

### Usage associé à un flux applicatif

En fonction de l'activité des utilisateurs, les flux applicatifs évoluent en permanence, en nombre, en nature et en quantité des informations échangées.

L'Usage est variable dans le temps et représente l'utilisation effective du réseau par les flux applicatifs (typiquement en nombre d'éléments binaires - bit - par seconde). Sa mesure est donc objective. L'Usage correspondant à chaque flux peut être dans un deuxième temps classifié et agrégé selon différents critères, parmi lesquels :

- la topologie réseau : accès entrants, accès sortants ;
- la typologie des flux : combien de flux pour chaque application ;
- la criticité des flux : niveau d'importance de chaque flux.

### Demande associée au flux applicatif

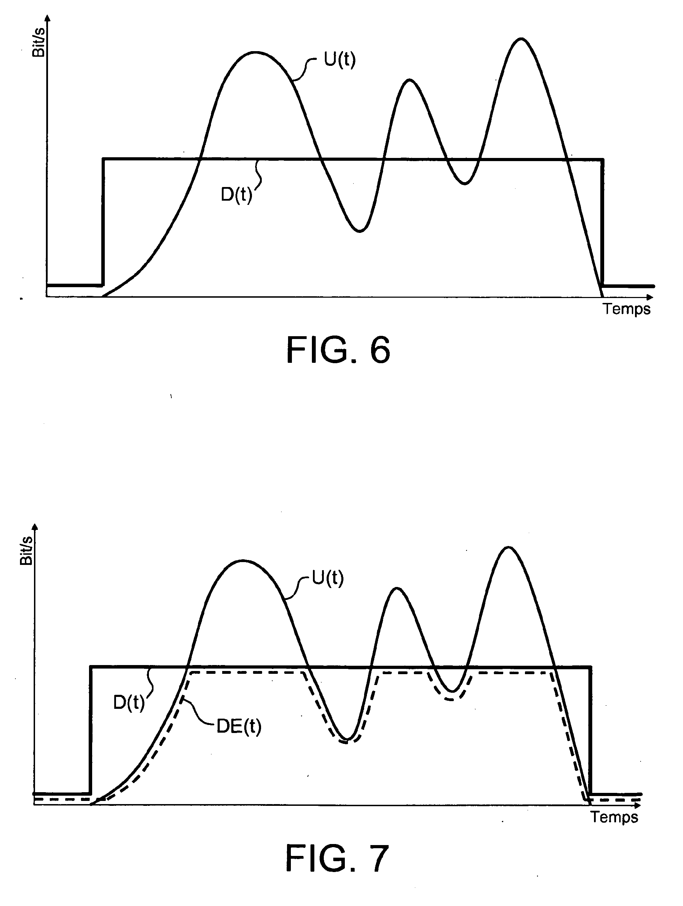

La valeur Demande est liée aux objectifs associés à chaque flux applicatif. Cette valeur renseigne sur le débit nécessaire et suffisant (typiquement en bit/s) pour que le flux satisfasse l'objectif de performance associé à l'application qui le génère. Notons que la Demande n'est pas corrélée directement à l'Usage. En particulier comme cela est illustré par la figure 6 :

- la Demande peut être plus grande que l'Usage parce que les contraintes appliquées sur le flux ne lui permettent pas d'atteindre son objectif. Dans ce cas c'est le réseau qui limite le débit.

- la Demande peut être plus grande que l'Usage parce que l'application n'a pas réellement besoin d'une telle ressource (par exemple les données à transmettre sont peu nombreuses, et le flux n'utilise pas toute la capacité réseau qui lui est offerte). Dans ce cas c'est l'application qui limite le débit.
- la Demande peut être plus petite que l'Usage parce que la ressource réseau est suffisante, voire en excès) et que l'application est suffisamment élastique pour l'utiliser. Dans ce cas, le débit peut être limité par l'application ou par le réseau, mais la Demande est largement servie.

La valeur de la Demande associée à un flux applicatif peut être acquise par différents moyens, par exemple :

- par configuration statique consistant à affecter préalablement une valeur de Demande à un flux applicatif, et quand le flux est reconnu, on effectue l'association avec la Demande ;
- par signalisation : les applications signalent au réseau leur propre Demande. Ceci est le cas notamment des flux temps réel tels que la téléphonie, par exemple pour des réseaux utilisant le protocole IP. Dans ce cas, les applications signalent au réseau leur propre Demande à travers le protocole RSVP (pour Resource ReSerVation Protocol), ou le protocole SIP (pour Session Initiation Protocol). Dans ce cas l'association entre un flux et une Demande prend dynamiquement en compte la valeur signalée ;
- par défaut : dans le cas où il n'y a ni configuration préalable, ni signalisation de la Demande par l'application, une valeur par défaut de Demande peut être attribuée au flux.

Pour simplifier les explications, on considèrera que dès que le flux applicatif est détecté, sa Demande est validée ; lorsqu'il cesse, sa Demande vaut zéro.

Toutefois, le procédé selon l'invention s'applique même si la Demande d'un flux applicatif donné varie de façon continue dans le temps.

### Contrainte appliquée sur le flux applicatif

Le paramètre Contrainte sur un flux applicatif représente la limitation de ressource appliquée par le réseau sur le flux applicatif considéré (typiquement en bit/s).

Le mécanisme exerçant la contrainte peut prendre différentes formes.

En particulier ce mécanisme peut consister en :

- une limitation simple du débit global des liaisons : dans ce cas la ressource est partagée de façon plus ou moins arbitraire entre les flux. C'est principalement le comportement des protocoles de transport de type TCP, UDP, STP, par exemple, lorsqu'ils rentrent en compétition directe. Le résultat final dépend alors essentiellement de la ressource réseau, du nombre de flux en compétition et de leur élasticité ;
- un mécanisme d'allocation des ressources : dans ce cas, un dispositif d'allocation exerce une régulation sur les flux applicatifs. Cette contrainte peut être calculée et appliquée sur les flux de diverses manières. Elle peut également s'appliquer soit sur les flux pris isolément, soit sur des groupes de flux.

A titre d'exemple de mécanismes d'allocation des ressources, on peut citer : les mécanismes de réservation fixe ou semi-fixe (configuration statique) ; les mécanismes de réservation dynamique (qui analysent et traitent les éléments de signalisation émis par l'application et en déduise une estimation du besoin de ressource pour le flux applicatif) ; les mécanismes adaptatifs de portée locale à l'accès ou globale au réseau (de bout en bout) et qui cherchent à répartir dynamiquement la ressource entre tous les flux actifs selon les situations de congestion qui peuvent se trouver.

Ainsi, au cours d'une communication entre les sites A et B, lorsque le flux applicatif est détecté, sa Contrainte est estimée et exercée s'il y a lieu, et lorsque la transmission dudit flux cesse, sa Contrainte associée devient indéterminée.

En fonction des dispositifs mis en oeuvre, il peut ne pas toujours être possible d'estimer la Contrainte. Par exemple, en l'absence de congestion, il est possible que la seule information que l'on puisse déterminer soit que le flux est non contraint (c'est-à-dire Contrainte > Usage). Notons que le procédé selon l'invention s'applique même si la Contrainte appliquée à un flux varie au cours du temps.

### Demande Effective associée au flux applicatif

Pour de nombreuses applications, la ressource effectivement consommée (hors contrainte liée au réseau) par un flux applicatif varie considérablement dans le temps. Cette variation peut être due au comportement des protocoles de communication (TCP), aux phases d'activité liées à l'application elle-même, par exemple un flux applicatif consommera beaucoup de ressources lors de l'affichage d'un nouveau formulaire de saisie, mais peu de ressources dans la phase de remplissage de ce formulaire par un opérateur. De ce fait, il n'est pas optimal d'associer au flux une Demande constante, car celle-ci sera surdimensionnée dans nombre de situations.

Selon un mode préféré de réalisation de l'invention, on introduit la notion de Demande Effective à l'instant t (notée DE(t)) de la façon suivante :

- lorsque le flux applicatif n'est pas contraint comme cela est illustré par la figure 7, c'est-à-dire lorsque son débit n'est pas limité par le réseau, alors : Contrainte(t) > Usage(t), et

$$DE(t) = Min[Usage(t) ; Demande(t)]$$

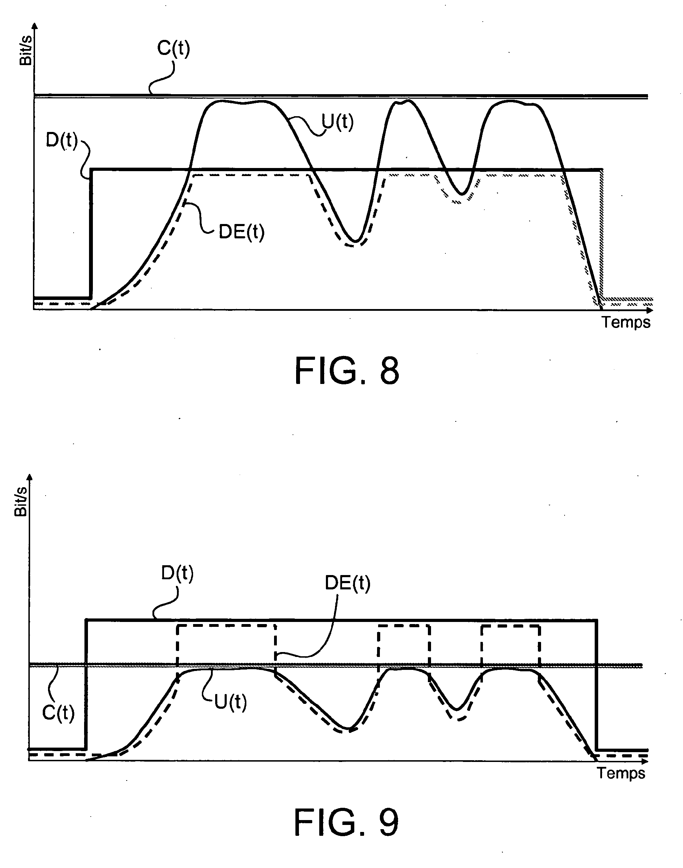

- lorsque le flux applicatif est contraint par le réseau de telle manière que la contrainte est supérieure à la demande, comme cela est illustré par la figure 8, alors : Contrainte(t) > Demande(t), et

$$DE(t) = Min[Usage(t) ; Demande(t)] = Demande(t)$$

- lorsque le flux applicatif est contraint par le réseau de telle manière que la contrainte est inférieure ou égale à la demande, comme cela est illustré par la figure 9, alors : Contrainte(t) ≤ Demande(t), et

$$DE(t) = Demande(t)$$

Notons que la Demande Effective DE(t) est variable dans le temps.

### Densité de Demande Effective DDE(t)

La Densité de Demande Effective (DDE) sur un chemin caractérise son taux de charge effective, c'est-à-dire ramené aux demandes effectives.

Le but de l'invention est d'équilibrer les Densités de Demande Effective de chaque chemin disponible entre deux sites, de manière à obtenir le meilleur rendement d'ensemble possible.

Selon l'invention, pour un chemin donné de capacité totale BW, et emprunté par les flux applicatifs 1 à F, on définit la valeur de la Densité de Demande Effective à l'instant t en sommant les Demandes Effectives de chaque flux et en ramenant la valeur sur la capacité totale du chemin :

$$DDE(t) = [\Sigma_{(j=1 à F)} DE_j(t)] / BW$$

Notons que :

- DDE(t) inférieure à 100% signifie que le chemin est sous-chargé, et donc capable d'accueillir de nouveaux flux applicatifs tout en satisfaisant ceux déjà présents,
- DDE(t) supérieure ou égale à 100% signifie que le chemin est surchargé, et qu'il ne peut pas attribuer suffisamment de ressources à chaque flux. Dans ce cas, il est possible soit de défavoriser certains flux peu critiques pour en protéger d'autres plus critiques, soit de contraindre tous les flux d'une façon identique.

Il est important de noter que la notion de Densité Demande Effective est différente de la notion de congestion du chemin.

En effet, un chemin peut être congestionné, c'est-à-dire, la somme des Usages atteint sa capacité maximale, alors que la Densité de Demande Effective de ce chemin est inférieure à 100%, notamment à cause de l'élasticité des flux. En revanche, un chemin non congestionné, c'est-à-dire, pour lequel la somme des Usages n'atteint pas la capacité maximale du chemin, aura toujours une Densité de Demande Effective inférieure à 100%.

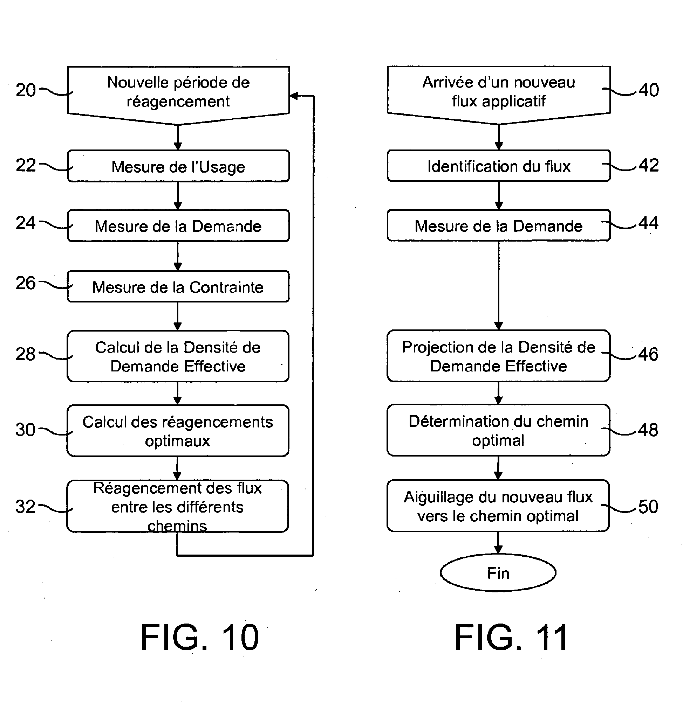

L'optimisation de la répartition de plusieurs flux applicatifs sur les différents chemins disponibles entre le site A et le site B peut se faire soit selon un processus continu en l'absence de nouveaux flux (figure 10) soit selon un processus discontinu lorsqu'un nouveau flux doit être échangé entre les sites A et B (figure 11).

Le processus continu permet de ré-agencer périodiquement les flux applicatifs entre les différents chemins possibles, tandis que le processus discontinu permet de choisir le meilleur chemin pour un nouveau flux applicatif au moment de son apparition. Ce dernier processus est appliqué lors du passage actif d'un flux applicatif. Il s'agit essentiellement de déterminer sur quel chemin aiguiller ce nouveau flux.

En dehors de l'arrivée d'un nouveau flux applicatif, d'autres paramètres peuvent varier sur chacun des chemins et influencent de ce fait la Densité de Demande Effective de ces chemins. Parmi ces paramètres, citons par exemple :

- l'arrêt de certains flux,
- la variation de la Demande Effective de certains flux (changement de leur profil d'activité),
- la variation de la capacité du chemin (pouvant aller jusqu'à sa complète indisponibilité).

Il y a alors deux stratégies possibles :

- ne pas intervenir pour ré-agencer les flux, en comptant sur les arrêts des anciens flux (ce qui fait diminuer la Densité de Demande Effective) et sur l'arrivée de nouveaux flux pour calculer progressivement un bon équilibre ;
- intervenir périodiquement en ré-agençant les différents flux pour équilibrer à nouveau les Densités de Demande Effectives sur les chemins disponibles.

La période de réagencement dépend de l'implémentation, de la vitesse de variation des différents paramètres et de la précision de l'équilibre que l'on recherche. Dans les réseaux actuels, une période raisonnable s'étend typiquement de quelques secondes à quelques minutes.

La figure 10 illustre schématiquement les étapes essentielles d'un processus continu.

L'étape 20 correspond au début d'une nouvelle période de réagencement.

A l'étape 22, l'aiguilleur/régulateur 19 détermine l'Usage U(t) de chaque flux applicatif.

A l'étape 24, l'aiguilleur/régulateur 19 détermine la Demande D(t) de chaque flux applicatif.

A l'étape 26, l'aiguilleur/régulateur 19 détermine la Contrainte C(t) appliquée sur chaque flux applicatif. Cette contrainte peut être appliquée au niveau de l'aiguilleur/régulateur 19 lui-même ou encore dans un équipement externe, par exemple l'équipement d'accès au réseau 11. Elle peut tenir compte de la nature du flux, de sa criticité, etc.

A l'étape 28 l'aiguilleur/régulateur 19 calcule la Demande Effective DE(t) de chaque flux applicatif, puis détermine la Densité de Demande Effective DDE (t) de chaque chemin.

A l'étape 30 l'aiguilleur/régulateur 19 détermine les réagencements optimaux selon la politique choisie pour équilibrer la Densité de Demande Effective DE(t) de chaque chemin.

Selon une caractéristique du procédé de l'invention, pour estimer a priori l'impact du déplacement d'un flux existant, noté af, d'un ancien chemin de capacité notée $BW_{ac}$ vers un nouveau chemin de capacité notée $BW_{nc}$ sur les Densités de Demande Effective respectives de ces deux chemins, on utilise la fonction ProjEff[DDE(t)] représentant la Projection Effective de Densité de Demande Effective, définie comme suait :

- Impact sur le nouveau chemin :

$$\mathtt{ProjEff[DDE_{nc}(t)] = DDE_{nc}(t) + DE_{af}(t)/BW_{nc}}$$

- Impact sur l'ancien chemin :

$$\mathtt{ProjEff[DDE_{ac}(t)] = DDE_{ac}(t) - DE_{af}(t)/BW_{ac}}$$

L'aiguilleur/régulateur 19 est programmé pour utiliser un ou plusieurs des critères de réagencement suivantes :

- ne rien faire : compter sur l'arrêt des flux pour faire diminuer la Densité de Demande Effective et sur l'arrivée de nouveaux flux pour s'approcher progressivement de l'équilibre entre les chemins,
- ré-agencer uniquement les flux ayant une forte demande (forte valeur de D(t)) ou encore une forte demande effective (forte valeur de DE(t)),
- ré-agencer uniquement les flux ayant une longue espérance de vie (estimée selon la nature du flux ou selon un apprentissage de la durée de vie de flux applicatifs similaires dans le passé).

Notons que le procédé selon l'invention peut être implémenté au moyen d'algorithmes similaires à ceux mis en oeuvre pour optimiser les dispositifs de stockage de blocs d'informations de tailles variées (disques durs, etc.).

A l'étape 32, l'aiguilleur/régulateur 19 applique les éventuelles modifications de chemin pour chacun des flux applicatifs dont il a décidé le réagencement.

Le processus discontinu est décrit par la figure 11.

L'étape 40 correspond à la détection de l'apparition d'un nouveau flux échangé entre les sites A et B.

A l'étape 42, l'aiguilleur/régulateur 19 identifie le nouveaux flux. Cette tâche consiste, d'une part, à reconnaître la nature de l'application dont les informations sont portées par ce nouveau flux, et d'autre part, à déterminer le site destination de ce flux. On notera « nf » ce nouveau flux applicatif.

A l'étape 44, connaissant la nature de l'application, l'aiguilleur/régulateur 19 en déduit la Demande associée au nouveau flux applicatif (par exemple par une table configurée à partir d'un dispositif externe, ou encore en analysant les éléments de signalisation qui peuvent accompagner ce flux). Cette demande $D_{nf}(t)$ est a priori constante pendant toute la vie du flux, et repasse à zéro lorsque le flux cesse d'être présent. Elle peut également être variable dans le temps (par exemple grâce aux éléments de signalisation). On peut remarquer que dans cette étape, on ne connaît pas encore le comportement effectif du nouveau flux.

A l'étape 46, l'aiguilleur/régulateur 19 effectue une projection de la Densité de Demande Effective DDE(t) sur l'ensemble des chemins disponibles. Il s'agit d'une estimation de ce que serait la Densité de Demande Effective DDE (t) de ces chemins si le nouveau flux applicatif les empruntait.

Si on suppose que la Densité de Demande Effective DDE(t) de chaque chemin est déjà déterminée, par exemple par le processus continu, la Projection de Densité de Demande Effective pour le chemin lors de l'arrivée du nouveau flux (nf) est calculée à l'étape 46 de la manière suivante :

$$\texttt{Proj[DDE(t)]= DDE(t) + D_{nf}(t)/BW.}$$

A l'étape 48, l'aiguilleur/régulateur 19 détermine le chemin optimal CO pour le nouveau flux applicatif ayant la plus faible valeur de projection de Densité de Demande Effective parmi l'ensemble des chemins possibles. A l'étape 50, l'aiguilleur/régulateur 19 aiguille alors le nouveau flux (nf) sur le chemin optimal (CO) tel que déterminé dans l'étape précédente.

Cet aiguillage peut être réalisé de diverses manières, en fonction des technologies de réseau (émission sur une interface physique particulière, marquage du flux avec un indicateur qui sera utilisé pour sélectionner l'interface de l'équipement d'accès, émission d'une commande vers un organe d'aiguillage situé ailleurs sur le chemin, etc.).

Notons que le procédé selon l'invention s'applique à des groupes de flux applicatifs plutôt qu'aux flux individuels sans sortir du cadre de l'invention.

Dans ce cas, il suffit de remplacer :

- l'usage d'un flux applicatif U(t) par l'usage du groupe de flux Ug(t),
- la demande d'un flux applicatif D(t) la demande du groupe de flux Dg(t),
- la contrainte appliquée sur un flux applicatif C(t) par la contrainte appliquée sur le groupe de flux Cg(t),
- la Demande Effective d'un flux applicatif DE(t) par la Demande Effective du groupe de flux DEg(t), etc...

Un cas où il est particulièrement intéressant de travailler sur des groupes de flux applicatifs se rencontre sur les réseaux de type MPLS avec Classes de Service, les groupes étant appelés « Behavior Aggregate ».

Notons également que les critères du choix du chemin peuvent être complétés selon les circonstances et le contexte par d'autres paramètres associés aux liaisons disponibles tels que par exemple :

- le niveau de sécurité,
- le coût,
- le niveau de qualité,
- etc.

Le dispositif mettant en oeuvre le procédé selon l'invention est soit un routeur d'accès agencé à l'entrée d'un réseau d'interconnexion, soit un multiplexeur agencé dans le réseau d'interconnexion, soit un serveur d'accès au réseau.

**Revendications**

**1.** Procédé d'optimisation du partage d'une pluralité de ressources réseau entre une pluralité de flux de données générés par une pluralité d'applications, lesdits flux étant susceptibles d'emprunter un nombre n de chemins [ABi], i= 1 à n, reliant au moins un site A et au moins un site B dans un réseau de télécommunication (6),
procédé **caractérisé en ce qu'**il comporte :

- une première phase consistant à déterminer à chaque instant t pour chaque flux une valeur U(t) représentant l'utilisation par ledit flux d'au moins une ressource réseau parmi la pluralité de ressources réseau disponibles, une valeur D(t) représentant la demande de ressource réseau nécessaire et suffisante pour que le flux satisfasse un objectif de performance pré-établi pour ladite application, et une valeur C(t) représentant une contrainte limitant la ressource réseau attribuable au flux considéré,
- une deuxième phase consistant à :

   • calculer, en fonction desdites valeurs U(t), D(t) et C(t), une valeur DE(t) représentant la quantité de ressource réseau effectivement nécessaire à un instant t pour satisfaire l'objectif de performance dudit flux en fonction de la contrainte C(t), du type d'application générant ledit flux et du type d'utilisation de ladite application, et à
   • calculer en fonction des différentes valeurs DE(t), et pour chaque chemin de transmission [ABi], i=1 à n, une valeur $DDE_i(t)$ représentant la Densité de Demande Effective sur ledit chemin en prenant en compte l'ensemble des flux échangés entre les sites A et B,

- une troisième phase consistant à répartir dynamiquement les flux générés par les différentes applications entre les différents chemins [ABi], i=1 à n, en fonction des densités de Demande Effective $DDE_i(t)$ sur les chemins [ABi], i=1 à n.

2. Procédé selon la revendication 1, dans lequel, pour chaque flux échangé entre les sites A et B, la phase de régulation comporte les étapes suivantes :

   - mesurer la valeur de l'Usage U(t),
   - déterminer la valeur de la Demande D(t),
   - déterminer la valeur de la Contrainte C(t),
   - calculer la valeur de la Demande Effective DE(t),
   - calculer les densités de Demande Effective $DDE_i(t)$ sur chaque chemin [ABi], i=1 à n, en prenant en compte l'ensemble des flux échangés entre les sites A et B,
   - modifier la répartition des flux sur les chemins [ABi], i=1 à n, de manière à équilibrer les Densités de Demande Effective sur les chemins disponibles.

3. Procédé selon la revendication 1, comportant en outre les étapes suivantes lorsqu'un nouveau flux devant être échangé entre le site A et le site B apparaît :

   - identifier la nature de l'application qui génère ledit nouveau flux,
   - déterminer la valeur D(t) initialement associée à ce nouveau flux,
   - effectuer une projection de la Densité de Demande Effective $Proj[DDE_i(t)]$ sur chaque chemin [ABi], i=1 à n, dans l'hypothèse où le nouveau flux emprunterait chacun desdits chemins,
   - aiguiller le nouveau flux vers le chemin ayant la plus petite projection de Densité de Demande Effective $Proj[DDE_i(t)]$.

4. Procédé selon la revendication 2 ou la revendication 3, **caractérisé en ce que** la répartition des flux entre les différents chemins [ABi], i=1 à n, est effectuée en outre en fonction du niveau de sécurité de chacun desdits chemins [ABi], i=1 à n, et/ou du niveau de qualité assuré par chacun desdits chemins [ABi], i=1 à n, et/ou du coût financier de l'utilisation de chacun desdits chemins [ABi], i=1 à n.

5. Procédé selon l'une des revendications 1 à 4, dans lequel chaque flux échangé entre les sites A et B est un agrégat de plusieurs flux individuels.

6. Procédé selon la revendication 5, dans lequel lesdits flux individuels sont agrégés en fonction de la topologie du réseau, et/ou de la typologie des flux, et/ou du nombre de flux pour chaque application, et/ou de la criticité de chaque flux.

7. Procédé selon l'une des revendications 1 à 6, dans lequel ladite ressource réseau représente la bande passante globale disponible pour échanger des flux pendant une communication entre les sites A et B et en ce que la valeur U(t) représente le débit effectivement utilisé pour transmettre un flux entre les sites A et B, la valeur D(t) représente le débit nécessaire et suffisant pour que le flux généré satisfasse l'objectif de performance pré-établi associé à l'application générant ledit flux, la valeur C(t) représente la valeur maximale du débit autorisé par le réseau pour transmettre le flux considéré, et la valeur DE(t) représente le débit effectivement nécessaire par ledit flux en fonction de limitations de débit, du type d'application générant ledit flux et du type d'utilisation de ladite application pour satisfaire l'objectif de performance pendant ladite communication entre les sites A et B.

8. Procédé selon la revendication 7, dans lequel, la valeur DE(t) est variable dans le temps et est définie de la façon suivants :

- lorsque la ressource consommée par le flux n'est pas limitée par le réseau :

$$DE(t) = Min[U(t), D(t)];$$

et
- lorsque la ressource consommée par le flux est limitée par le réseau à la valeur C(t):

$$DE(t) = D(t).$$

9. Procédé selon la revendication 7, dans lequel pour un chemin donné [ABi], i=1 à n, de bande passante disponible $BW_i$, emprunté par une pluralité de flux $F_j$, j=1 à F, la valeur de la Densité de Demande Effective $DDE_i(t)$ à l'instant t est égale à la somme des Demandes Effectives $DE_j(t)$ de chaque flux divisée par la bande passante totale $BW_i$ dudit chemin :

$$DDE_i(t) = [\Sigma_{(j=1àF)} DE_j(t)] / BW_i$$

10. Procédé selon les revendications 3 et 10, **caractérisé en ce**, si de nouveaux flux devant être échangés entre les sites A et B apparaissent, la projection de Densité de Demande Effective pour le chemin [ABi] lors de l'arrivée du nouveau flux (nf) se calcule comme suit :

$$Proj[DDE_i(t)] = DDE_i(t) + D_{nf}(t)/BW_i$$

$BW_i$ représentant la ressource partagée entre les applications générant les flux sur le chemin [ABi].

11. Dispositif d'optimisation du partage d'une pluralité de ressources réseau entre une pluralité de flux de données générés par une pluralité d'applications, lesdits flux étant susceptibles d'emprunter un nombre n de chemins [ABi], i= 1 à n, reliant au moins un site A et au moins un site B dans un réseau de télécommunication (6), dispositif **caractérisé en ce qu'**il comporte :

• des moyens (19) pour déterminer à chaque instant t pour chaque flux une valeur U(t) représentant l'utilisation par ledit flux d'au moins une ressource réseau parmi la pluralité de ressources réseau disponibles, une valeur D(t) représentant la demande de ressource réseau nécessaire et suffisante pour que le flux satisfasse un objectif de performance pré-établi pour ladite application, et une valeur C(t) représentant une contrainte limitant la ressource réseau attribuable au flux considéré, et pour calculer, en fonction desdites valeurs U(t), D(t) et C(t), une valeur DE(t) représentant la ressource réseau effectivement nécessaire à un instant t pour que ledit flux satisfasse l'objectif de performance en présence de la contrainte C(t), du type d'application générant ledit flux et du type d'utilisation de ladite application,
• des moyens (19) pour calculer en fonction des différentes valeurs DE(t), et pour chaque chemin de transmission [ABi], i=1 à n, une valeur $DDE_i(t)$ représentant la Densité de Demande Effective de ladite ressource réseau sur ledit chemin en prenant en compte l'ensemble des flux échangés entre les sites A et B et pour répartir dynamiquement les flux générés entre les différents chemins [ABi], i=1 à n, en fonction des densités de Demande

Effective DDE$_i$(t) des chemins [ABi], i=1 à n.

**12.** Dispositif selon la revendication 11, **caractérisé en ce que** lesdits moyens (19) comportent :

- un module pour mesurer la valeur U(t) pour chaque flux échangé au cours d'une communication entre le site A et le site B,
- un module pour déterminer la valeur D(t),
- un module pour déterminer la valeur C(t),
- un module pour calculer la valeur DE(t),
- un module pour calculer les densités de Demande Effective DDE(t) sur chaque chemin [ABi], i=1 à n, en prenant en compte l'ensemble des flux échangés entre les sites A et B,
- un module pour répartir les flux sur les chemins [ABi], i=1 à n, de manière à équilibrer les Densités de Demande Effective des chemins disponibles.

**13.** Dispositif selon la revendication 11, **caractérisé en ce que** lesdits moyens (19) comportent en outre :

- un module pour identifier un nouveau flux échangeant des informations entre le site A et le site B,
- un module pour déterminer la valeur D(t) associée initialement à ce nouveau flux,
- un module pour effectuer une projection de la Densité de Demande Effective sur chaque chemin [ABi], i=1 à n, dans l'hypothèse où le nouveau flux emprunterait chacun desdits chemins,
- un module pour aiguiller le nouveau flux vers le chemin i ayant la plus petite projection de densité de Demande Effective Proj[DDE$_i$(t)].

**14.** Dispositif selon la revendication 12 ou la revendication 12, **caractérisé en ce qu'**il consiste en un routeur d'accès agencé à l'entrée d'un réseau d'interconnexion.

**15.** Dispositif selon la revendication 12 ou la revendication 13, **caractérisé en ce qu'**il consiste en un multiplexeur agencé dans le réseau d'interconnexion.

**16.** Dispositif selon la revendication 12 ou la revendication 13, **caractérisé en ce qu'**il consiste en un serveur d'accès au réseau.

**17.** Logiciel stocké sur un support connectable à un réseau de télécommunication adapté pour l'optimisation du partage d'une pluralité de ressources réseau entre une pluralité de flux de données générés par une pluralité d'applications, lesdits flux étant susceptibles d'emprunter un nombre n de chemins [ABi], i= 1 à n, reliant au moins un site A et au moins un site B dans un réseau de télécommunication (6), **caractérisé en ce qu'**il comporte :

- des instructions pour déterminer à chaque instant t pour chaque flux une valeur U(t) représentant l'utilisation par ledit flux d'au moins une ressource réseau parmi la pluralité de ressources réseau disponibles, une valeur D(t) représentant la demande de ressource réseau nécessaire et suffisante pour que le flux satisfasse un objectif de performance pré-établi pour ladite application, et une valeur C(t) représentant une contrainte limitant la ressource réseau attribuable au flux considéré, et
- des instructions pour :

  • calculer, en fonction desdites valeurs U(t), D(t) et C(t), une valeur DE(t) représentant la quantité de ressource réseau effectivement nécessaire à un instant t pour satisfaire l'objectif de performance dudit flux en fonction de la contrainte C(t), du type d'application générant ledit flux et du type d'utilisation de ladite application, et à
  • calculer en fonction des différentes valeurs DE(t), et pour chaque chemin de transmission [ABi], i=1 à n, une valeur DDE$_i$(t) représentant la Densité de Demande Effective sur ledit chemin en prenant en compte l'ensemble des flux échangés entre les sites A et B, et

- des instructions pour répartir dynamiquement les flux générés par les différentes applications entre les différents chemins [ABi], i=1 à n, en fonction des densités de Demande Effective DDE$_i$(t) sur les chemins [ABi], i=1 à n.

**18.** Logiciel selon la revendication 17, comportant en outre :

- des instructions pour mesurer la valeur U(t) pour chaque flux échangé cours d'une communication entre le site A et le site B,
- des instructions pour déterminer la valeur D(t),
- des instructions pour déterminer la valeur C(t),
- des instructions pour calculer la valeur DE(t),
- des instructions pour calculer les Densités de Demande Effective respectives $DDE_i(t)$ de chaque chemin [ABi], i=1 à n, pour l'ensemble des flux échangés entre les sites A et B,
- des instructions pour répartir les flux sur les chemins [ABi], i=1 à n, de manière à équilibrer les Densités de Demande Effectives sur les chemins disponibles.

**19.** Logiciel selon la revendication 17, comportant en outre :

- des instructions pour identifier un nouveau flux à échanger entre le site A et le site B,
- des instructions pour mesurer la valeur D(t) associée initialement à ce nouveau flux,
- des instructions pour calculer une projection de la Densité de Demande Effective $Proj[DDE_i(t)]$ de chaque chemin [ABi], i=1 à n, dans l'hypothèse où le nouveau flux emprunterait chacun desdits chemins,
- des instructions pour aiguiller le nouveau flux vers le chemin i ayant la plus petite projection de la Densité de Demande Effective $Proj[DDE_i(t)]$.

**Claims**

**1.** Method for optimising the sharing of a plurality of network resources between a plurality of data flows generated by a plurality of applications, said flows being able to take a number n of paths [ABi], i= 1 to n, linking at least one site A and at least one site B in a telecommunications network (6),
method **characterised in that** it comprises:

- a first phase consisting in determining at each instant t for each flow a value U(t) representing the use by said flow of at least one network resource from among the plurality of network resources available, a value D(t) representing the demand of network resources required and sufficient in order for the flow to satisfy a pre-established performance objective for said application, and a value C(t) representing a constraint limiting the network resource that can be attributed to the flow in question,
- a second phase consisting in:

-- calculating, according to said values U(t), D(t) and C(t), a value DE(t) representing the quantity of network resources effectively required at an instant t in order to satisfy the performance objective of said flow according to the Constraint C(t), the type of application generating said flow and the type of use of said application, and in
-- calculating according to the different values DE(t), and for each transmission path [ABi], i=1 to n, a value $DDE_i(t)$ representing the Effective Demand Density on said path by taking into account all of the flows exchanged between the sites A and B,

- a third phase consisting in dynamically distributing the flows generated by the different applications between the different paths [ABi], i=1 to n, according to the Effective Demand Densities $BDE_i(t)$ on the paths [ABi], i=1 to n.

**2.** Method according to claim 1, wherein, for each flow exchanged between the sites A and B, the regulation phase comprises the following steps:

- measuring the value of the Use U(t),
- determining the value of the Demand D(t),
- determining the value of the Constraint C(t),
- calculating the value of the Effective Demand DE(t),
- calculating Effective Demand densities $DDE_i(t)$ on each path [ABi], i=1 to n, taking into account all of the flows exchanged between the sites A and B,
- modifying the distribution of the flows on the paths [ABi], i=1 to n, in such a way as to balance Effective Demand Densities on the available paths.

**3.** Method according to claim 1, further comprising the following steps when a new flow that has to be exchanged between the site A and the site B appears:

- identifying the type of the application that is generating said new flow,
- determining the value D(t) initially associated with this new flow,
- carrying out a projection of the Effective Demand Density $Proj[DDE_i(t)]$ on each path [ABi], i=1 to n, in the hypothesis where the new flow would take each of said paths,
- routing the new flow towards the path having the smallest projection of Effective Demand Density $Proj[DDE_i(t)]$.

4. Method according to claim 2, **characterised in that** the distribution of the flows between the different paths [ABi], i=1 to n, is carried out furthermore according to the level of security of each one of said paths [ABi], i=1 to n, and/or of the level of quality provided by each one of said paths [ABi], i=1 to n, and/or of the financial cost of using each one of said paths [ABi], i=1 to n.

5. Method according to claim 1, wherein each flow exchanged between the sites A and B is an aggregate of several individual flows.

6. Method according to claim 5, wherein said individual flows are aggregated according to the topology of the network, and/or of the typology of the flows, and/or of the number of flows for each application, and/or of the criticality of each flow.

7. Method according to one of claim 1 to claim 6, wherein said network resource shows the global bandwidth available for exchanging flows during a communication between the sites A and B and in that the value U (t) shows the speed effectively used for transmitting a flow between the sites A and B, the value D(t) shows the speed required and sufficient in order for the flow generated to satisfy the pre-established performance objective associated with the application generating said flow, the value C(t) shows the maximum value for the speed authorised by the network for transmitting the flow in question, and the value DE(t) shows the speed effectively required by said flow according to speed limitations, the type of application generating said flow and the type of use of said application in order to satisfy the performance objective during said communication between the sites A and B.

8. Method according to claim 7, wherein, the value DE(t) is variable over time and is defined in the following way:

   - when the resource consumed by the flow is not limited by the network:

$$DE(t) = Min[U(t), D(t)];$$

   and
   - when the resource consumed by the flow is limited by the network to the value C(t):

$$DE(t) = D(t).$$

9. Method according to claim 7, wherein for a given path [ABi], i=1 to n, of available bandwidth BWi, taken by a plurality of flows $F_j$, j=1 to F, the value of the Effective Demand Density $DDE_i(t)$ at the instant t is equal to the sum of the Effective Demands $DE_j(t)$ of each flow divided by the total bandwidth $BW_i$ of said path:

$$DDE_i(t) = [\Sigma_{(j=1\ to\ F)}\ DE_j(t)] / BW_i$$

10. Method according to claim 3 and claim 9, **characterised in that**, if new flows that are to be exchanged between the sites A and B appear, the projection of Effective Demand Density for the path [ABi] at the time of the arrival of the new flow (nf) is calculated as follows:

$$Proj[DDE_i(t)] = DDE_i(t) + D_{nf}(t)/BW_i$$

$BW_i$ representing the resource shared between the applications generating the flows on the path [ABi].

11. Device for optimising the sharing of a plurality of network resources between a plurality of data flows generated by a plurality of applications, said flows being able to take a number n of paths [ABi], i= 1 to n, linking at least one site A and at least one site B in a telecommunications network (6), device **characterised in that** it comprises:

-- means (19) for determining at each instant t for each flow a value U(t) representing the use per said flow of at least one network resource from among the plurality of network resources available, a value D(t) representing the demand of network resources required and sufficient in order for the flow to satisfy a pre-established performance objective for said application, and a value C(t) representing a constraint limiting the network resource attributable to the flow in question, and for calculating, according to said values U(t), D(t) and C(t), a value DE(t) representing the network resource effectively required at an instant t in order for said flow to satisfy the performance objective in the presence of the Constraint C(t), of the type of the application generating said flow and of the type of use of said application,

-- means for calculating according to the different values DE(t), and for each transmission path [ABi], i=1 to n, a value $DDE_i(t)$ representing the Effective Demand Density of said network resource on said path by taking into account all of the flows exchanged between the sites A and B and for dynamically distributing the flows generated between the different paths [ABi], i=1 to n, according to the Effective Demand densities $DDE_i(t)$ of the paths [ABi], i=1 to n.

12. Device according to claim 11, **characterised in that** said means (19) comprises:

- a module for measuring the value U(t) for each flow exchanged during a communication between the site A and the site B,
- a module for determining the value D(t),
- a module for determining the value C(t),
- a module for calculating the value DE(t),
- a module for calculating the Effective Demand densities DDE(t) on each path [ABi], i=1 to n, by taking into account all of the flows exchanged between the sites A and B,
- a module for distributing the flows on the paths [ABi], i=1 to n, in such a way as to balance the Effective Demand Densities of the paths available.

13. Device according to claim 11, **characterised in that** said means (19) further comprises:

- a module for identifying a new flow exchanging information between the site A and the site B,
- a module for determining the value D(t) initially associated with this new flow,
- a module for carrying out a projection of the Effective Demand Density on each path [ABi], i=1 to n, in the hypothesis where the new flow would take each one of said paths,
- a module for routing the new flow towards the path i having the smallest projection of Effective Demand density $Proj[DDE_i(t)]$.

14. Device according to claim 12 or claim 13, **characterised in that** it consists of an access router arranged at the entry of an interconnection network.

15. Device according to claim 12 or claim 13, **characterised in that** it consists of a multiplexer arranged in the interconnection network.

16. Device according to claim or claim 13, **characterised in that** it consists of an access server to the network.

17. Software stored on a support that can be connected to a telecommunications network adapted for the optimisation of the sharing of a plurality of network resources between a plurality of data flows generated by a plurality of applications, said flows being able to take a number n of paths [ABi], i= 1 to n, linking at least one site A and at least one site B in a telecommunications network (6), **characterised in that** it comprises:

- instructions for determining at each instant t for each flow a value U(t) representing the use by said flow of at least one network resource from among the plurality of network resources available, a value D(t) representing the demand of network resources required and sufficient in order for the flow to satisfy a pre-established performance objective for said application, and a value C(t) representing a constraint limiting the network resource that can be attributed to the flow in question, and
- instructions for:

-- calculating, according to said values U(t), D(t) and C(t), a value DE(t) representing the quantity of network resources effectively required at an instant t in order to satisfy the performance objective of said flow according to the Constraint C(t), the type of application generating said flow and the type of use of said application, and in

-- calculating according to the different values DE(t), and for each transmission path [ABi], i=1 to n, a value $DDE_i(t)$ representing the Effective Demand Density on said path by taking into account all of the flows exchanged between the sites A and B, and

- instructions for dynamically distributing the flows generated by the different applications between the different paths [ABi], i=1 to n, according to the Effective Demand densities $DDE_i(t)$ on the paths [ABi], i=1 to n.

18. Software according to claim 17, further comprising:

- instructions for measuring the value U(t) for each flow exchanged during a communication between the site A and the site B,
- instructions for determining the value D(t),
- instructions for determining the value C(t),
- instructions for calculating the value DE(t),
- instructions for calculating the respective Effective Demand Densities $DDE_i(t)$ of each path [ABi], i=1 to n, for all of the flows exchanged between the sites A and B,
- instructions for distributing the flows on the paths [ABi], i=1 to n, in such a way as to balance the Effective Demands Densities on the available paths.

19. Software according to claim 17, further comprising:

- instructions for identifying a new flow to be exchanged between the site A and the site B,
- instructions for measuring the value D(t) initially associated with this new flow,
- instructions for calculating a projection of the Effective Demand Density $Proj[DDE_i(t)]$ of each path [ABi], i=1 to n, in the hypothesis where the new flow would take each one of said paths,
- instructions for routing the new flow towards the path i having the smallest projection of the Effective Demand Density $Proj[DDE_i(t)]$.

**Patentansprüche**

1. Verfahren zum Optimieren der gemeinsamen Benutzung einer Mehrzahl von Netz(werk)ressourcen in Aufteilung zwischen einer Mehrzahl von durch eine Mehrzahl von Anwendungen generierten Datenflüssen, wobei diese Flüsse eine Anzahl n von Wegen [AB i ], i = 1 bis n, nehmen können, welche wenigstens eine Site A mit wenigstens einer Site B in einem Telekommunikationsnetz(werk) miteinander verbinden, das Verfahren **dadurch gekennzeichnet, dass** es umfasst:

- eine erste Phase, welche darin besteht, dass in jedem Zeitpunkt t für jeden Fluß jeweils ein Wert U (t) bestimmt wird, welcher die Benutzung wenigstens einer Netz(werk)ressource unter einer Mehrzahl von verfügbaren Netz (werk)-ressourcen durch diesen Fluß wiedergibt, dass des weiteren ein Wert D (t) bestimmt wird, welcher die bzw. den notwendige(n) und hinreichende(n) Nachfrage bzw. Bedarf nach bzw. an Netz(werk)ressource wiedergibt, die bzw. der notwendig und hinreichend ist, damit der Fluß ein für die genannte Anwendung vorgegebenes Leistungsziel befriedigt, sowie ein Wert C (t) bestimmt wird, welcher eine dem jeweils betrachteten Fluß zurechenbare begrenzende Einschränkung bzw. Belastungsgrenze der Netz(werk)ressource wiedergibt,
- das Verfahren des weiteren umfassend eine zweite Phase bestehend aus der Berechnung, in Abhängigkeit von den genannten Werten U (t), D (t), und C (t), eines Wertes DE (t), welcher die Menge an Netz(werk)ressource wiedergibt, die in einem Zeitpunkt t effektiv notwendig ist, um das Leistungsziel des genannten Flusses in Abhängigkeit von der Zwangseinschränkung bzw. Belastungsgrenze C (t), von dem Typ der den Fluß generierenden Anwendung und von dem Typ der Benutzung der betreffenden Anwendung zu befriedigen, sowie aus dem Berechnen, in Abhängigkeit von den verschiedenen Werten DE (t), und für jeden Übertragungsweg [AB i ], i = 1 bis n, eines Werts $DDE_i$ (t), welcher die effektive Bedarfs- bzw. Nachfragedichte auf dem genannten Weg unter Berücksichtigung der Gersamtheit der zwischen den Sites A und B ausgetauschten Flüsse wiedergibt,
- das Verfahren des weiteren umfassend eine dritte Phase bestehend in der dynamischen Aufteilung der von den verschiedenen Anwendungen generierten Flüsse zwischen den verschiedenen Wegen [Abi], i = 1 bis n, in Abhängigkeit von den effektiven Bedarfs-.bzw. Nachfragedichten DDE$_i$ (t) auf den Wegen [AB i ], i = 1 bis n.

2. Verfahren nach Anspruch 1, bei welchem für jeden zwischen den Sites A und B ausgetauschten Fluß die Regelungsphase jeweils die folgenden Etappen bzw. Stufen umfaßt :

- Messen des Werts der Benutzung U (t),
- Bestimmen des Werts D (t) der Nachfrage bzw. des Bedarfs,
- Bestimmen des Werts der Zwangseinschränkung C(t),
- Berechnen des effektiven Bedarfs bzw. der effektiven Nachfrage DE (t)
- Berechnen der effektiven Bedarfs-bzw. Nachfragedichten DDE$_i$ (t) auf jedem Weg [ AB i ], i= 1 bis n; unter Berücksichtigung der Gesamtheit der zwischen den Sites A und B ausgetauschten Flüsse;
- Modifizieren der Verteilung der Flüsse auf die Wege [AB i ], i = 1 bis n, derart daß die effektiven Bedarfs-bzw. Nachfragedichten auf den verfügbaren Wegen ausgeglichen werden.

3. Verfahren nach Anspruch 1, das des weiteren die folgenden Etappen bzw. Stufen umfasst, sobald ein neuer, zwischen den Sites A und B auszutauschender Fluß auftritt:

- Identifizieren der Natur der Anwendung, welche diesen neuen Fluß generiert;
- Bestimmen des anfänglich diesem neuen Fluß zugeordneten Werts D (t),
- Vornahme einer Projektion bzw. Vorschau auf die effektive Bedarfs-bzw. Nachfragedichte Proj [Dde$_i$ (t)] auf jedem Weg [ AB i ], n = 1 bis n, unter der Hypothese, dass der neue Fluß jeweils jeden der genannten Wege nehmen würde,
- Weichenstellung zur Lenkung des Flußes in Richtung zu dem Weg, welcher den kleinsten Wert der Projektion bzw. Vorschau der effektiven Bedarfs- bzw. Nachfragedichte Proj [DDE$_i$ (t)] aufweist.

4. Verfahren nach Anspruch 2 oder nach Anspruch 3 **dadurch gekennzeichnet, dass** die Verteilung der Flüsse zwischen den verschiedenen Wegen [ AB i ], i = 1 bis n, des weiteren in Abhängigkeit von dem Sicherheitsniveau jedes der jeweiligen Wege [ Ab i ], i = 1 bis n, erfolgt und/oder von dem jeweils durch jeden der Wege [ AB i ], i = 1 bis n, gewährleisten Qualitätsniveau, und/oder von den finanziellen Kosten der Benutzung jedes der genannten Wege [ AB i ], i = 1 bis n.

5. Verfahren nach einem der Ansprüche 1 bis 4, bei welchem jeweils jeder zwischen den Sites A und B getauschte Fluß ein Aggregat bzw. eine Zusammenfassung oder Bündelung von mehreren einzelnen Flüssen ist.

6. Verfahren nach Anspruch 5, bei welchem die Zusammenfassung bzw. Bündelung der genannten einzelnen individuellen Flüsse in Abhängigkeit von der Topologie des Netzwerks, und/oder von der Typologie der Flüsse, und/oder von der Flußzahl für jeweils jede Anwendung, und/oder von der Kritizität jedes Flusses erfolgt.

7. Verfahren nach einem der Ansprüche 1 bis 6, bei welchem die genannte Netz(werk)ressource das für den Austausch der Flüsse während einer Kommunikation zwischen den Sites A und B verfügbare globale Durchlassband (Duchlassbereich) darstellt, bei welchem sodann der Wert U (t) den effektiv für die Übertragung eines Flusses zwischen den Sites A und B verwendeten Durchsatz darstellt, bei welchem ferner D (t) den notwendigen und hinreichenden Durchsatz darstellt, damit der generierte Fluß dem vorgegebenen Leistungsziel genügt, welches der den genannten Fluß generierenden Anwendung zugeordnet ist, bei welchem ferner der Wert C (t) den Maximalwert des Durchsatzes darstellt, der durch das Netzwerk für die Übertragung des betreffenden Flusses autorisiert ist, und bei welchem des weiteren der Wert DE (t) den Durchsatz darstellt, der effektiv durch den genannten Fluß notwendig ist, in Abhängigkeit von Begrenzungen des Durchsatzes, vom Typ der den Fluß generierenden Anwendung, und vom Typ der Benutzung der genanntenb Anwendung, um das Leistungsziel während der genannten Kommunikation zwischen den Sites A und B zu erfüllen.

8. Verfahren nach Anspruch 7, bei welchem der Wert DE (t) in der Zeit veränderlich ist und in folgender Weise definiert ist:

- wenn die durch den Fluß verbrauchte Ressource nicht durch das Netzwerk begrenzt ist:

$$DE\ (t) = Min\ [U\ (t),\ D\ (t)];$$

sowie
- wenn die durch den Fluß verbrauchte Ressource durch das Netzwerk auf den Wert C (t) begrenzt ist:

$$DE\,(t) = D\,(t).$$

**9.** Verfahren nach Anspruch 7, bei welchem für einen gegebenen Weg [AB i ], i = 1 bis n, das verfügbare Durchlassband $BW_i$ durch eine Mehrzahl von Flüssen $F_j$, j = 1 bis F, eingenommen ist, so ist die effektive Nachfrage-bzw. Bedarfs-dichte $DDE_i$ (t) gleich der Summe der Effektiv-Nachfragen bzw. -bedarfe $DE_j$ (t) jedes Flusses geteilt durch das Gesamt- Durchlassband BW i des genannten Wegs:

$$DDE_i\,(t) = [\,_{(J\,=\,1\,bis\,F)}\,DE_j\,(t)]\,/\,BW_i.$$

**10.** Verfahren nach den Ansprüchen 3 und 10, **dadurch gekennzeichnet, dass** beim Auftreten neuer, zwischen den Sites A und B auszutauschender Flüsse die Projektion bzw. Vorschau der effektiven Bedarfs- bzw. Nachfragedichte beim Eintreffen des neuen Flusses (nF) wie folgt berechnet wird:

$$Proj\,[DDE_i\quad(t)] = DDE_i\,(t) + D_{nF}\,(t)\,/\,BW_i$$

wobei $BW_i$ die zwischen den die Flüsse auf dem Weg [ AB i ] generierenden Anwendungen gemeinsam geteilte Ressource darstellen.

**11.** Vorrichtung zum Optimieren der gemeinsamen Benutzung einer Mehrzahl von Netz(werk)ressourcen in Aufteilung zwischen einer Mehrzahl von durch eine Mehrzahl von Anwendungen generierten Datenflüssen, wobei diese Datenflüsse eine Anzahl n von Wegen [ AB i ], i = 1 bis n nehmen können, welche wenigstens eine Site A und wenigstens eine Site B in einem Telekommunikationsnetz (6) miteinander verbinden,
die Vorrichtung **dadurch gekennzeichnet, dass** sie umfasst:

Mittel (19), um in jedem Zeitpunkt t und für jeden Fluß einen Wert U (t) zu bestimmen, welcher die Benutzung wenigstens einer Netz(werk)ressource unter der Mehrzahl verfügbarer Netz(werk)ressourcen durch den genannten Fluß wiedergibt, Mittel um des weiteren einen Wert D (t) zu bestimmen, welcher den/die notwendige (n) und hinreichende(n) Nachfrage bzw. Bedarf nach/an Netz(werk)ressource wiedergibt, damit der Fluß ein für die betreffende Anwendung vorgegebenes Leistungsziel befriedigen kann, sowie fernerhin Mittel um einen Wert C (t) zu bestimmen, welcher eine dem jeweils betrachteten Fluß zurechenbare begrenzende Einschränkung der Netz(werk)ressource wiedergibt, sowie Mittel um in Abhängigkeit von den genannten Werten U (t), D (t), und C (t) einen Wert DE (t) zu berechnen, welcher die in einem Zeitpunkt t notwendige und hinreichende Netz (werk)ressource wiedergibt, damit der genannte Fluß das Leistungsziel in Gegenwart der begrenzenden Einschränkung bzw. Belastungsgrenze C (t) und in Abhängigkeit von dem Typ der den genannten Fluß generierenden Anwendung und von dem Typ der Benutzung der genannten Anwendung befriedigen kann und dass die Vorrichtung des weitern Mittel (19) umfasst, um in Abhängigkeit von den verschiedenen Werten DE (t), und für jeden Übertragungsweg [AB i ], i = 1 bis n, einen Wert $DDE_i$ (t) zu berechnen, welcher die effektive Bedarfs-bzw.Nachfragedichte der genannten Netz(werk)ressource auf dem betreffenden Weg unter Berücksichtigung der Gesamtheit der zwischen den Sites A und B ausgetauschten Flüsse wiedergibt, sowie Mittel um dynamisch die generierten Flüsse zwischen den verschiedenen Wegen [AB i ], i = 1 bis n, in Abhängigkeit von den effektiven Bedarfs-bzw.Nachfragedichten $DDE_i$ (t) der Wege [ AB i }, i = 1 bis n aufzuteilen.

**12.** Vorrichtung nach Anspruch 11, **dadurch gekennzeichnet, daß** die Mittel (19) umfassen:

- einen Modul zum Messen des Werts U (t) für jeden während einer Kommunikation zwischen der Site A und der Site B ausgetauschten Fluß,
- einen Modul zum Bestimmen des Werts D (t),
- einen Modul zum Bestimmen des Werts C (t),
- einen Modul zum Berechnen des Werts DE (t),
- einen Modul zum Berechnen der effektiven Bedarfs-bzw. Nachfragedichten DDE (t) auf jedem Weg [ AB i ], i = 1 bis n, unter Berücksichtigung der Gesamtheit der zwischen den Sites A und B ausgetauschten Flüsse,

- einen Modul zur Aufteilung der Flüsse auf die Wege [AB i ], i = 1 bis n, derart dass die effektiven Bedarfs- bzw. Nachfragedichten der verfügbaren Wege ausgeglichen werden.

**13.** Vorrichtung nach Anspruch 11, **dadurch gekennzeichnet, dass** die genannten Mittel (19) des weiteren umfassen:

- einen Modul zum Identifizieren eines neuen Flusses, welcher Informationen zwischen der Site A und der Site B austauscht,
- einen Modul zum Bestimmen des anfänglich mit diesem neuen Fluß verbundenen bzw. ihm zugeordneten Werts D (t),
- einen Modul zur Vornahme einer Projektion bzw. Vorschau der effektiven Bedarfs- bzw. Nachfragedichte auf jedem Weg [ AB i ], i = 1 bis n, unter der Hypothese, dass der neue Fluß jeweils jeden der genannten Wege nehmen würde,
- einen Modul zur Lenkung des neuen Flusses zu dem Weg i, welcher die kleinste Projektion bzw. Vorschau der effektiven Bedarfs- bzw. Nachfragedichte Proj [DDE$_i$ (t)] aufweist.

**14.** Vorrichtung nach Anspruch 12 oder nach Anspruch 13, **dadurch gekennzeichnet, dass** sie aus einem am Eingang eines Zwischenverbindungsnetzwerks betriebenen Router besteht.

**15.** Vorrichtung nach Anspruch 12 oder nach Anspruch 13, **dadurch gekennzeichnet, dass** sie aus einem in dem Zwischenverbindungsnetzwerk betriebenen Multiplexer besteht.

**16.** Vorrichtung nach Anspruch 12 oder nach Anspruch 13, **dadurch gekennzeichnet, dass** sie aus einem Zugangs-Server zu dem Netzwerk besteht.

**17.** Auf einem an ein Telekommunikations-Netzwerk anschließbaren Träger gespeicherte Programm-Software in Anpassung zum Optimieren der gemeinsamen Benutzung (Sharingbetrieb) einer Mehrzahl von Netz(werk)ressourcen in Aufteilung zwischen einer Mehrzahl von durch eine Mehrzahl von Anwendungen generierten Datenflüssen, wobei diese Datenflüsse eine Anzahl n von Wegen [AB i ], i = 1 bis n, nehmen können, welche wenigstens eine Site A und wenigstens eine Site B in einem Telekommunikationsnetzwerk (6) miteinander verbinden, die Programm-Software **dadurch gekennzeichnet, dass** sie umfasst:

- Befehle, um in jedem Zeitpunkt t und für jeden Fluß einen Wert U (t) zu bestimmen, welcher die Benutzung wenigstens einer Netz(werk)ressource unter der Mehrzahl verfügbarer Netz(werk)ressourcen durch den genannten Fluß wiedergibt, um des weiteren einen Wert D (t) zu bestimmen, welcher den/die notwendige(n) und hinreichende(n) Nachfrage bzw. Bedarf nach/an Netz(werk)ressource wiedergibt, damit der Fluß ein für die betreffende Anwendung vorgegebenes Leistungsziel befriedigen kann, sowie fernerhin um einen Wert C (t) zu bestimmen, welcher eine dem jeweils betrachteten Fluß zurechenbare begrenzende Einschränkung bzw. Belastungsbegrenzung der Netz(werk)ressource wiedergibt, sowie
- Befehle um:

in Abhängigkeit von den genannten Werten U (t), D (t), und C (t) einen Wert DE (t) zu berechnen, welcher die in einem Zeitpunkt t notwendige und hinreichende Menge an Netz(werk)-Ressource wiedergibt, damit das Leistungsziel des genannten Flußes in Abhängigkeit von der begrenzenden Einschränkung bzw. Belastungsbegrenzung C (t) und in Abhängigkeit von dem Typ der den genannten Fluß generierenden Anwendung und von dem Typ der Benutzung der genannten Anwendung befriedigt wird, um in Abhängigkeit von den verschiedenen Werten DE (t), und für jeden Übertragungsweg [AB i ] , i = 1 bis n, einen Wert DDE$_i$ (t) zu berechnen, welcher die effektive Bedarfs- bzw. Nachfragedichte auf dem betreffenden Weg unter Berücksichtigung der Gesamtheit der zwischen den Sites A und B ausgetauschten Flüsse wiedergibt, sowie

- Befehle, um dynamisch die von den verschiedenen Anwendungen generierten Flüsse zwischen den verschiedenen Wegen [AB i], i = 1 bis n, in Abhängigkeit von den effektiven Bedarfs- bzw. Nachfragedichten DDE$_i$ (t) der Wege [ AB i }, i = 1 bis n, aufzuteilen.

**18.** Programm - Software nach Anspruch 17, welche des weitern umfasst:

- Befehle zum Messen des Werts U (t) für jeden während einer Kommunikation zwischen der Site A und der Site B ausgetauschten Fluß,
- Befehle zum Bestimmen des Werts D (t),

- Befehle zum Bestimmen des Werts C (t),
- Befehle zum Berechnen des Werts DE (t),
- Befehle zum Berechnen der jeweiligen effektiven Bedarfs- bzw. Nachfragedichten $DDE_i$ (t) auf jedem Weg [ AB i ], i = 1 bis n, für die Gesamtheit der zwischen den Sites A und B ausgetauschten Flüsse,
- Befehle zur Aufteilung der Flüsse auf die Wege [AB i ], i = 1 bis n, derart dass die effektiven Bedarfs- bzw. Nachfragedichten der verfügbaren Wege ausgeglichen werden.

**19.** Programm - Software nach Anspruch 17, welche des weiteren umfasst:

- Befehle zum Identifizieren eines neuen Flusses, welcher Informationen zwischen der Site A und der Site B austauscht,
- Befehle zum Bestimmen des anfänglich mit diesem neuen Fluß verbundenen bzw. ihm zugeordneten Werts D (t),
- Befehle zum Berechnen einer Projektion bzw. Vorschau der effektiven Bedarfs- bzw. Nachfragedichte auf jedem Weg [ AB i ], i = 1 bis n, unter der Hypothese, dass der neue Fluß jeweils jeden der genannten Wege nehmen würde,
- Befehle zur Lenkung des neuen Flusses zu dem Weg i, welcher die kleinste Projektion bzw. Vorschau der effektiven Bedarfs- bzw. Nachfragedichte Proj [$DDE_i$ (t)] aufweist.

FIG. 1

FIG. 2

FIG. 3

Chemin [AB1]
Capacité BW[AB1]

Site A

Site B

Chemin [ABn]
Capacité BW[ABn]

6

# FIG. 4

6

14  19  11

16

18  Site A

11  19  14

16

Site B  18

# FIG. 5

Bit/s

U(t)

D(t)

Temps

# FIG. 6

Bit/s

U(t)

D(t)

DE(t)

Temps

# FIG. 7

FIG. 8

FIG. 9

20 — Nouvelle période de réagencement

22 — Mesure de l'Usage

24 — Mesure de la Demande

26 — Mesure de la Contrainte

28 — Calcul de la Densité de Demande Effective

30 — Calcul des réagencements optimaux

32 — Réagencement des flux entre les différents chemins

## FIG. 10

Arrivée d'un nouveau flux applicatif — 40

Identification du flux — 42

Mesure de la Demande — 44

Projection de la Densité de Demande Effective — 46

Détermination du chemin optimal — 48

Aiguillage du nouveau flux vers le chemin optimal — 50

Fin

## FIG. 11

**EP 2 103 055 B1**

**Documents brevets cités dans la description**

- FR 2842677 A1